# FASCICULE DE BREVET EUROPEEN

(11) **EP 3 466 623 B1**
(45) Date de publication et mention de la délivrance du brevet: **11.12.2019**
(21) Numéro de dépôt: 18182219.8
(22) Date de dépôt: 06.07.2018
(51) Int. Cl.: B26D 1/30, B26D 7/08, B26D 7/00, B26D 7/01

(54) **OUTIL DE DÉCOUPE DE PLAQUE NOTAMMENT EN MATÉRIAU RECONSTITUÉ**
PLATTENSCHNEIDEWERKZEUG, INSBESONDERE FÜR PLATTEN AUS WIEDERHERGESTELLTEM MATERIAL
PLATE CUTTING TOOL, IN PARTICULAR MADE OF RECONSTITUTED MATERIAL

(43) Date de publication de la demande: 10.04.2019
(73) Titulaire: Etablissements Pierre Gréhal et Cie SA, 95560 Baillet en France (FR)
(72) Inventeur: MARCON, Lionel, 95620 PARMAIN (FR)
(74) Mandataire: Rataboul, Xavier

(56) Documents cités:
- EP-A1- 2 902 157
- EP-A1- 2 907 630
- WO-A1-2008/049976
- DE-U1-202005 010 660

## Description

L'invention concerne un outil de découpe de plaque, notamment une plaque faite en un matériau reconstitué.

Dans le domaine de la construction, moderne, on utilise souvent des éléments de construction formés ou reconstitués à partir de matériaux qui se présentent ou qui sont réduits en poudre, en fibres, en granulés ou en copeaux. Ainsi, à titre d'exemples non limitatifs, on utilise des carreaux de plâtre, de ciment ou de céramique comme éléments de construction ou de finition, des plaques de bardage en fibrociment, des plaques en fibres cellulosiques de densité moyenne, des plaques d'ardoise reconstituée comme plaques de revêtement ou de finition et des plaques stratifiées comme éléments d'un parquet flottant. En raison de la nature du mélange de composants à partir duquel les plaques sont faites ou en raison de l'utilisation pour laquelle les plaques sont faites, elles ont deux caractéristiques en commun : la dureté de la plaque, ou pour le moins de sa face d'utilisation, et son épaisseur.

Lorsque les plaques sont faites en un matériau reconstitué réunissant dureté et épaisseur, il faut disposer d'un outil capable de surmonter ces deux difficultés de coupe.

Il existe de nombreux outils capables de couper de telles plaques. Néanmoins, la pose de ces plaques se faisant sur le chantier, l'outil doit être adapté à une utilisation sur le chantier, c'est-à-dire hors d'un atelier.

Un tel outil est par exemple décrit dans les documents WO2006095065 et EP2083972. Il s'agit d'un outil de découpe pour découper une plaque faite en un matériau reconstitué, l'outil comprenant un support sur lequel une lame est montée pivotante par un pivot, entre une position ouverte pour recevoir, entre le support et la lame, la plaque qui doit être découpée, et une position fermée à la fin d'une découpe. La lame a un tranchant plat et courbe et elle est pourvue d'une poignée. La dureté des plaques à couper étant généralement importante, un bras de levier est généralement prévu entre la poignée et la lame pour permettre d'appliquer une force plus importante.

Le support comprend une fente destinée à recevoir au moins une partie de la lame au cours de la coupe.

La lame effectue, en coopération avec les bords de la fente, un cisaillement double : le tranchant plat et net de la lame glisse le long des bords longitudinaux de la lame, comme deux ciseaux. Ce cisaillement double a pour effet que la lame ne pénètre pas, au cours de la découpe, de manière habituelle dans la plaque à découper pour la fendre, mais enlève une bande du matériau de la plaque, bande dont la largeur correspond sensiblement à celle de la lame.

Bien qu'un tel cisaillement ne semble pas exposer la lame au risque de la voir fléchir ou courber, il n'en reste pas moins que les mouvements de la personne utilisant l'outil sont de nature à pouvoir introduire, involontairement, un effort transversal par rapport au plan de coupe, qui pourrait déformer la lame.

Ainsi, pour éviter qu'à force de découpe, la lame d'un tel outil ne se torde, il a été proposé de renforcer l'ensemble des structures de l'outil. Le document EP2083972 propose par exemple de munir la lame d'une rainure de renfort. Plus généralement, le support est également dimensionné pour assurer une rigidité optimale.

Dans le brevet EP2902157, la Demanderesse s'est aperçue de manière surprenante qu'en utilisant une fente de largeur supérieure à la largeur de la lame, la plaque de matériau était parfaitement coupée sur la face en contact avec la lame. En outre, la force nécessaire à la découpe est inférieure à celle nécessaire avec un outil de l'état de la technique. Ainsi, à capacité de coupe égale, l'outil est plus petit qu'un outil de l'état de la technique.

Les risques de torsion de la lame sont donc inférieurs et il est possible de réduire la rigidité et le coût de l'outil en utilisant moins de matière première. En corollaire, à quantité de matière première équivalente, l'outil selon l'état de la technique peut couper des plaques de matériau plus épaisses, nécessitant un effort de coupe important.

Dans ce brevet, l'invention propose des capots munis de fentes de tailles différentes à choisir selon la plaque à découpe.

Si l'outil fonctionne parfaitement, la manipulation et le stockage des capots peut être problématique. En effet, sur le chantier ou en dehors, les capots peuvent être perdus ou abîmés lorsqu'ils ne sont pas utilisés.

Le document DE10201 1050664 décrit un outil de découpe dont la largeur de fente est réglable grâce à deux réglettes coulissantes le long des deux bords de la fente. Le mécanisme mis en œuvre est complexe et peu robuste puisque les bords coulissants sont bloqués en position par un vis qui peut se desserrer. En outre, sans ces réglettes, les bords sont inutilisables puisqu'ils laissent apparaitre une partie du mécanisme de blocage. Enfin, ces réglettes peuvent être perdues.

L'objectif de la présente invention est de proposer un outil de découpe de plaques en un matériau reconstitué performant, nécessitant un effort de coupe inférieur aux outils de l'état de la technique, simple, peut coûteux, et adapté à une utilisation sur un chantier en conservant son réglage pendant l'utilisation, et sans risque de perte de pièces.

Par performant, on entend que la coupe doit être précise, au moins sur l'une des faces (la coupe selon l'épaisseur de la plaque peut être moins précise lorsque cette épaisseur ne se voit pas sur le montage final). Ainsi la coupe doit être nette sur au moins l'une des faces, et l'angle de coupe doit être constant.

Ainsi, l'invention a pour objet un outil de coupe pour découper une plaque faite en un matériau reconstitué d'épaisseur déterminée, l'outil comprenant un support fixe sur lequel une lame de largeur de lame déterminée, est montée pivotante par un pivot, entre une position ouverte pour recevoir, entre le support et la lame fixe, la plaque qui doit être découpée, et une position fermée à la fin d'une découpe, le support fixe comprenant une portion munie d'une fente destinée à recevoir au moins une partie de la lame au cours de la coupe, la fente comprenant deux bords longitudinaux espacés l'un de l'autre par une largeur de fente strictement supérieure à la largeur de lame de sorte que la lame est espacée de chaque bord longitudinal de la fente et n'entre pas en contact avec lesdits bords longitudinaux de la fente pendant le passage de la position ouverte à la position fermée, l'outil de coupe comprenant au moins un support mobile monté de manière mobile autour de l'axe de rotation de la lame entre une position d'engagement dans laquelle le support mobile est agencé le long des bords longitudinaux de la fente du support fixe , et une position de retrait dans laquelle le support mobile est agencé à distance des bords longitudinaux de la fente du support fixe, ledit au moins un support mobile comprenant une fente de largeur inférieure à la largeur de la fente du support fixe et supérieure à la largeur de la lame.

Le ou les support(s) mobile(s) étant en prise avec l'axe de rotation, ils ne risquent pas d'être perdus.

Selon d'autres modes de réalisation :
- ledit au moins un support mobile peut comprendre une lumière dans laquelle est engagé l'axe de rotation de la lame, de tel sorte que le support mobile est monté de manière mobile autour de l'axe de rotation de la lame, entre la position d'engagement et la position de retrait;
- le support mobile peut comprendre deux flancs longitudinaux espacés l'un de l'autre par une distance inférieure à la largeur de fente entre les deux bords longitudinaux du support fixe et supérieure à la largeur de la lame, chaque flancs étant muni d'une lumière dans laquelle est engagé l'axe de rotation de la lame, de tel sorte que le support mobile est monté de manière mobile autour de l'axe de rotation de la lame entre la position d'engagement et la position de retrait;
- la lumière portée par le support mobile peut être oblongue de telle sorte que le support mobile est monté coulissant par rapport à l'axe de rotation de la lame ;
- chaque flanc peut comprendre une portion d'appui destinée à coulisser le long des bords de la fente du support fixe, et une portion de guidage agencée contre le support fixe à distance de la portion d'appui de telle sorte que le support mobile est guidé en translation ;
- le support fixe peut comprendre une fente de réglage dans laquelle est monté coulissante une patte de préhension fixée au support mobile ;
- la lumière portée par le support mobile peut être circulaire de telle sorte que le support mobile est monté pivotant par rapport à l'axe de rotation de la lame.
- le support mobile peut comprendre deux flancs longitudinaux munis chacun d'une portion d'appui destinée à recouvrir les bords longitudinaux de la fente du support fixe en position d'engagement ;
- lorsque la lame est en position fermée et le support mobile en position de retrait, la lame peut être espacée de chaque bord longitudinal de la fente du support fixe par un entrefer égal ou supérieur à une épaisseur d'une première plaque à découper, et lorsque la lame est en position fermée et le support mobile en position d'engagement, la lame peut être espacée de chaque bord longitudinal de la fente du support mobile par un entrefer égal ou supérieur à une épaisseur d'une seconde plaque à découper d'épaisseur inférieure à l'épaisseur de la première plaque à découper; et/ou
- la lame peut être montée pivotante sur le support par un pivot muni d'entretoises d'épaisseur déterminée pour que la lame soit espacée des bords longitudinaux de la fente pendant la découpe.

D'autres caractéristiques de l'invention seront énoncées dans la description détaillée ci-après, faite en référence aux dessins annexés, qui représentent, respectivement :
- la figure 1, une vue schématique en perspective d'un mode de réalisation préféré d'un outil de découpe de plaque en matériau reconstitué selon l'invention dont le support mobile est coulissant ;
- la figure 2, une vue schématique de côté de l'outil de découpe de la figure 1 dont le support mobile est en position d'engagement ;
- la figure 3, une vue schématique de côté de l'outil de découpe de la figure 1 dont le support mobile est en position de retrait ;
- la figure 4, une vue schématique de dessus de l'outil de découpe de la figure 2;
- la figure 5, une vue schématique de dessus de l'outil de découpe de la figure 3;
- la figure 6, une vue schématique en coupe transversale d'un deuxième mode de réalisation d'un outil de découpe selon l'invention, comprenant plusieurs supports mobiles ;
- la figure 7, une vue schématique vue de dessus du mode de réalisation de la figure 6, dans lequel le premier support mobile est en position d'engagement et le deuxième support mobile est en position de retrait ; et
- la figure 8, une vue schématique en perspective d'un troisième mode de réalisation d'un outil de découpe de plaque en matériau reconstitué selon l'invention dont le support mobile est pivotant.

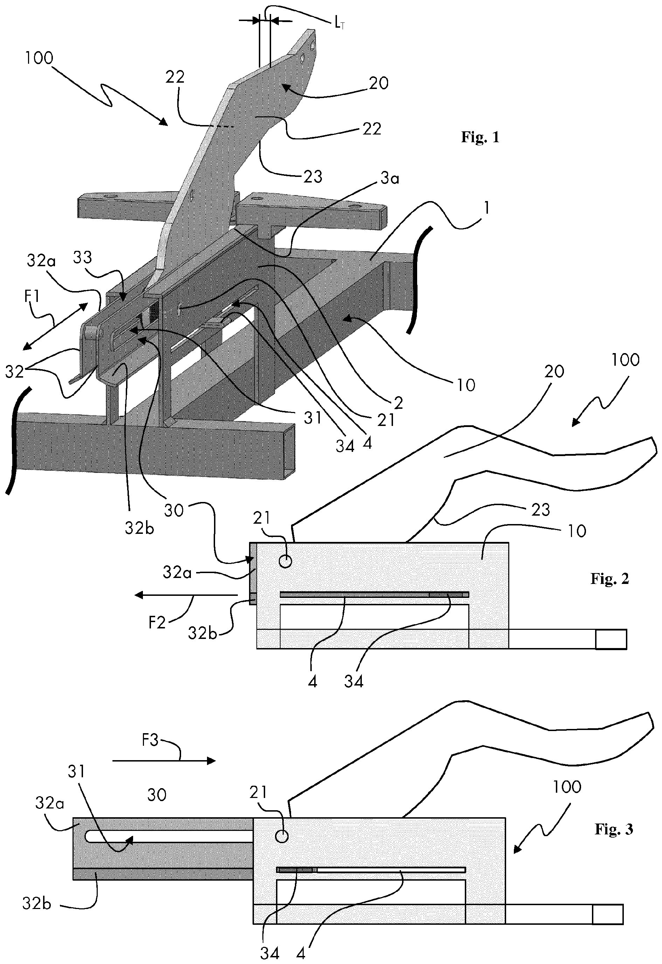

Les figures 1, 2 et 3 illustrent un premier mode de réalisation d'un outil de découpe 100 de plaques faites en matériau reconstitué d'épaisseur déterminée e1 ou e2 (non illustrées).

L'outil 100 comprend un support fixe 10 et une lame 20 montée pivotante sur le support fixe par un pivot 21, entre une position ouverte pour recevoir, entre le support 10 et la lame 20, la plaque qui doit être découpée, et une position fermée à la fin d'une découpe.

La lame 20 présente deux faces latérale 22 reliés par un tranchant 23 plat et net de largeur de lame Lt déterminée.

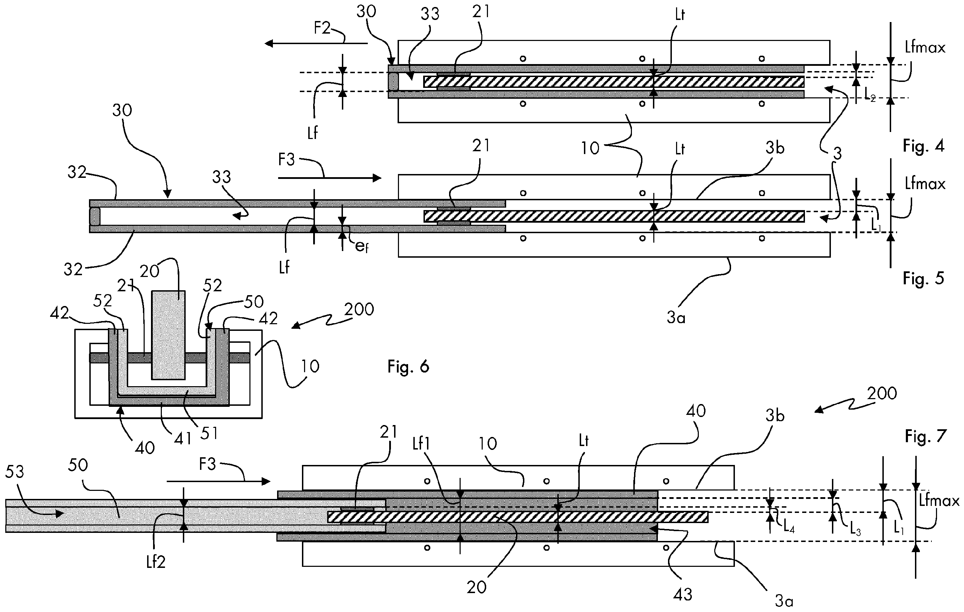

Le support fixe 10 comporte une portion de piètement 1 et une portion de support fixe 2 de la lame 20, cette portion de support 2 comportant une fente 3 (voir figure 5) destinée à recevoir au moins une partie de la lame 20 au cours de la coupe.

La fente 3 comprend deux bords longitudinaux 3a-3b espacés l'un de l'autre par une largeur de fente Lfmax strictement supérieure à la largeur de lame Lt de sorte que la lame 20 est espacée de chaque bord longitudinal 3a-3b de la fente 3 par un entrefer L1 égal à (Lfmax - Lt)/2. La lame n'entre donc jamais en contact avec lesdits bords longitudinaux de la fente pendant le passage de la position ouverte à la position fermée.

Cet entrefer L1 = Lfmax - Lt)/2 est adapté à la coupe d'une première plaque en matériau reconstitué d'épaisseur déterminée e1.

Selon l'invention, l'outil 100 comprend également un support mobile 30 monté de manière mobile autour de l'axe de rotation 21 de la lame 20 entre une position d'engagement (voir figures 2 et 4) et une position de retrait (voir figure 3 et 5).

Le support mobile 30 comprend une fente 33 de largeur Lf inférieure à la largeur Lfmax de la fente 3 du support fixe et supérieure à la largeur Lt de la lame 20. Par exemple, Lfmax est égal à 14mm (pour la découpe de plaques d'épaisseur e1 comprise entre 9 mm et 13 mm, notamment en stratifé) et la largeur Lf de la fente 33 est égale à 10 mm (pour la découpe de plaques d'épaisseur e2 inférieure à 9 mm, notamment en PVC).

Le support mobile 30 est muni d'une lumière 31 dans laquelle est engagé l'axe de rotation 21 de la lame 20, de tel sorte que le support mobile 30 est monté de manière mobile autour de l'axe de rotation 21 de la lame 20, entre la position d'engagement dans laquelle le support mobile 30 est agencé le long des bords longitudinaux 3a-3b de la fente 3 du support fixe 10, et la position de retrait dans laquelle le support mobile 30 est agencé à distance des bords longitudinaux 3a-3b de la fente 3 du support fixe 10.

Dans le mode de réalisation des figures 1 à 5, la lumière 31 d'engagement de l'axe de rotation 21 de la lame 20, portée par le support mobile 30, est oblongue de telle sorte que le support mobile est monté coulissant par rapport à l'axe de rotation, selon la flèche F1.

Dans le mode de réalisation de la figure 1, le support mobile 30 comprend deux flancs longitudinaux plans 32 espacés l'un de l'autre par une distance Lf inférieure à la largeur de fente Lfmax entre les deux bords longitudinaux 3a-3b du support fixe 10 et supérieure à la largeur Lt de la lame 20.

En d'autres termes, dans ce mode de réalisation, les flancs 32 présentent chacun une épaisseur ef égale à (Lfmax - Lf)/2. Ainsi, en choisissant l'épaisseur ef des flancs, on détermine l'entrefer L2 (voir figure 4) entre la lame et les bords de la fente 33 du support mobile, ici délimitée par les flancs, lorsque le support mobile est en position d'engagement.

Alternativement, les flancs longitudinaux constituant le support mobile peuvent être en forme de L. Dans ce cas, c'est la largeur de l'aile horizontale, en position d'engagement, qui détermine l'entrefer L2 entre le bord libre de l'aile de chaque flanc et la lame 20.

Cet entrefer L2, égal à = (Lf - Lt)/2, est adapté à la coupe d'une deuxième plaque en matériau reconstitué d'épaisseur déterminée e2 (non illustrée).

Ainsi, comme illustré aux figure 4 et 5, lorsque la lame est en position fermée et le support mobile 30 en position de retrait (figure 5), la lame 20 est espacée de chaque bord longitudinal 3a-3b de la fente du support fixe par un entrefer L1 adapté à la coupe d'une première plaque à découper d'épaisseur e1 (non illustrée).

Lorsque l'utilisateur doit découpe une plaque d'épaisseur e2 inférieure à l'épaisseur e1 de la première plaque, il pousse le support mobile 30 dans le sens de la flèche F3 de sorte que lorsque la lame est en position fermée et le support mobile en position d'engagement (figure 5), la lame 20 est espacée de chaque bord longitudinal de la fente 33 du support mobile 30 par un entrefer L2 adapté à la coupe de la seconde plaque à découper d'épaisseur e2.

Avantageusement, chaque flanc 32 comprend une portion d'appui 32a destinée à coulisser le long des bords de la fente du support fixe, et une portion de guidage 32b agencée contre le support fixe à distance de la portion d'appui 32a de telle sorte que le support mobile soit guidé en translation.

Le support mobile peut ainsi être tiré ou poussé précisément par l'utilisateur sans risque de torsion.

Pour faciliter la préhension du support mobile 30 par l'utilisateur, le support fixe 10 comprend avantageusement une fente de réglage 4 dans laquelle est monté coulissante une patte de préhension 34 fixée au support mobile 30. Dans le mode de réalisation illustré, la patte de préhension est fixée à l'un des flancs longitudinaux 32 du support mobile 30.

L'utilisateur peut ainsi tirer le support mobile 30 selon la flèche F2 en position de retrait, ou le pousser selon la flèche F3 en position d'engagement.

Dans une variante non illustrée, le support fixe comprend un moyen de blocage, tel qu'une goupille, du support mobile en position d'engagement. Ce dernier est alors bloqué par un organe de fixation déporté de la zone de découpe, ce qui évite qu'il ne soit désactivé par l'action de découpe elle-même (par exemple par vibration ou par un choc). Par exemple, le support fixe et le support mobile comprennent des orifices agencés en regard les uns des autres en position d'engagement, de sorte que l'utilisateur peut y engager la goupille pour bloquer le support mobile sur le support fixe.

Alternativement, l'organe de fixation peut bloquer la patte de préhension du support mobile lorsque ce dernier est en position d'engagement.

Dans le mode de réalisation de la figure 1, la portion du support 10 comprenant la fente 3 est constituée par une plaque pliée en U inversé dans l'âme de laquelle une échancrure rectangulaire a été découpée de manière à ménager une fente 3 comprenant deux bords longitudinaux 3a-3b espacés l'un de l'autre par une largeur de fente Lfmax déterminée.

Alternativement, la portion 2 du support comprenant la fente 3 peut être constituée par deux plaques pliées en L inversé, parallèles entre elles et espacées l'une de l'autre de manière à ménager une fente 3 comprenant deux bords longitudinaux 3a-3b espacés l'un de l'autre par une largeur de fente Lfmax déterminée (non illustré).

Encore alternativement, il pourrait s'agir d'une plaque préalablement découpée pour réaliser une échancrure rectangulaire, puis pliée en U inversé de sorte que l'échancrure constitue la fente 3 et que la partie non découpée forme un épaulement (non illustré).

L'Homme du métier pourra adapter la forme du support mobile (flancs plans, flancs pliés en L, en C, en U ou en 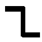 ) à celle du support fixe choisie, du moment qu'en position d'engagement, le support mobile diminue la largeur de fente.

Les figures 6 et 7 illustrent la possibilité de prévoir plusieurs supports mobiles 40-50. Bien entendu leur forme doit permettre un engagement sélectif pour réduire sélectivement la largeur de la fente de découpe.

Dans le mode de réalisation illustré, seuls deux supports sont représentés, mais il est possible d'en prévoir plus.

Dans cet exemple de réalisation, les supports mobiles 40-50 présentent une forme en U et sont imbriqués l'un dans l'autre. Ils présentent chacun une âme centrale, respectivement 41 et 51 et deux ailes verticales, respectivement 42 et 52.

Ils présentent chacun une lumière oblongue (non visible sur les figures) recevant l'axe de rotation 21 de la lame 20.

Sur la figure 7, le support mobile 40 est en position d'engagement. Les deux ailes 41 délimitent une fente 43 de largeur Lf1 inférieure à la largeur Lfmax de la fente 3 du support fixe 10 et supérieure à la largeur Lt de la lame 20.

La lame 20 est ainsi espacée de chaque bord longitudinal de la fente 43 par un entrefer L3 égal à (Lf1 - Lt)/2. La lame n'entre donc jamais en contact avec lesdits bords longitudinaux de la fente pendant le passage de la position ouverte à la position fermée.

Cet entrefer L3 est adapté à la coupe d'une plaque en matériau reconstitué d'épaisseur déterminée e3, inférieure à l'épaisseur e1 de la plaque qui peut être découpée lorsque les supports mobiles 40 et 50 sont en position de retrait et que la fente de découpe est celle qui est délimitée par les bords 3a-3b du support fixe 10.

Pour découper une plaque d'épaisseur e4 inférieure à l'épaisseur e3, l'utilisateur peut pousser le deuxième support mobile 50 selon la flèche F3 en position d'engagement.

Le support mobile 50 comprend deux ailes 51 délimitant une fente 53 de largeur Lf2 inférieure à la largeur Lfmax de la fente 3 du support fixe 10, inférieure à la largeur Lf1 de la fente 43 du deuxième support mobile 40, et supérieure à la largeur Lt de la lame 20.

La lame 20 est ainsi espacée de chaque bord longitudinal de la fente 53 par un entrefer L4 égal à (Lf2 - Lt)/2 adapté à la découpe de plaques d'épaisseur e3.

Il est ainsi possible de sélectionner un entrefer L1, L3 ou L4 en fonction de l'épaisseur de la plaque à découper.

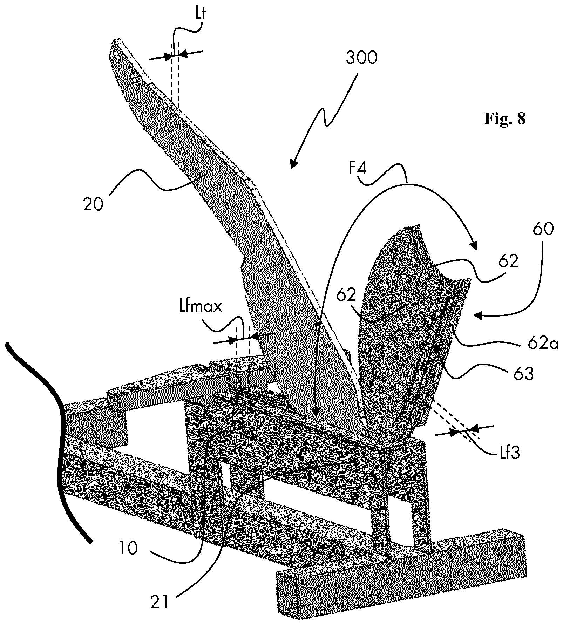

La figure 8 illustre un troisième mode de réalisation d'un outil de découpe 300 selon l'invention, dans lequel le support mobile 60 est pivotant autour de l'axe de rotation 21 de la lame 20 entre la position d'engagement et la position de retrait, le support mobile 60 comprenant une fente 63 de largeur Lf3 inférieure à la largeur Lfmax de la fente 3 du support fixe 10 et supérieure à la largeur Lt de la lame 20.

Le support mobile 60 illustré comprend deux flancs longitudinaux 62 espacés l'un de l'autre par la distance Lf3, chaque flancs 62 étant muni d'une lumière circulaire (non visible sur la figure) dans laquelle est engagé l'axe de rotation de la lame 20, de telle sorte que le support mobile 60 est monté pivotant par rapport à l'axe de rotation selon le sens de la flèche F4. Sur la figure 8, le support mobile 60 est illustré en position de retrait.

Avantageusement, chaque flanc longitudinal 62 est constitué d'une plaque en L définissant une portion d'appui 62a destinée à recouvrir les bords longitudinaux 3a-3b de la fente 3 du support fixe 10 en position d'engagement. La portion d'appui 62a constitue ici une butée de fin de course tout en assurant l'appui de la plaque à découper pendant la découpe.

Bien entendu, afin de faciliter la manipulation de ce mode de réalisation, la portion d'appui 62a peut comprendre en outre un organe de préhension, tel qu'une languette perpendiculaire et coplanaire à la portion d'appui 62a.

D'une manière générale, la différence entre la largeur Lfmax, Lf, Lf1, Lf2, Lf3 de la fente en utilisation et la largeur Lt de la lame est telle que la lame 20 est espacée de chaque bord longitudinal de la fente 3, 33, 43, 53, 63 par un entrefer L1, L2, L3, L4, L5 supérieur ou égal à 5% de la largeur de lame Lt, de préférence compris entre 5% et 60% de la largeur Lt de la lame 20.

Par exemple, si la lame a une largeur Lt de 6 mm, l'entrefer L1 mesure au moins entre 0,3 mm et 3.6 mm. Autrement dit, la largeur Lfmax, Lf, Lf1, Lf2, Lf3 de la fente 3, 33, 43, 53, 63 est comprise entre 6,6 mm et 13,2 mm.

Non seulement la présence d'entrefers entre la lame et les rebords de la fente permet une découpe plus facile (c'est-à-dire nécessitant moins d'efforts), mais les efforts nécessaires diminuent particulièrement, toutes choses égales par ailleurs, lorsque les entrefers sont supérieurs ou égaux à l'épaisseur e1, e2 de la plaque à découper.

Autrement dit, l'outil selon l'invention comprend de préférence une fente 3, 33, 43, 53, 63 en utilisation dont la largeur Lfmax, Lf, Lf1, Lf2, Lf3 est supérieure ou égale à deux fois l'épaisseur e1, e2, e3 de la plaque à découper plus une fois l'épaisseur de la lame 20.

En dimensionnant la fente de manière à ménager un entrefer au moins égal à l'épaisseur de la plaque à découper, on permet la découpe de plaques épaisses sans avoir à allonger le bras de levier nécessaire à la découpe. Par « égale », on entend que chaque entrefer mesure entre 80% et 120% de l'épaisseur de la plaque à découper.

Ainsi, non seulement l'invention permet de ménager plusieurs entrefers entre le lame et les bords de la fente, mais en plus, l'invention permet de ménager un entrefer très important, au moins égal (entre 80% et 120%) à l'épaisseur de la plaque à découper.

Ainsi, lorsque la lame est en position fermée et le support mobile en position de retrait, la lame 20 est espacée de chaque bord longitudinal 3a-3b de la fente 20 du support fixe par un entrefer L1 égal ou supérieur à une épaisseur e1 d'une première plaque à découper, et lorsque la lame est en position fermée et le support mobile 30, 40, 50, 60 en position d'engagement, la lame 20 est espacée de chaque bord longitudinal de la fente 33, 43, 53, 63 du support mobile par un entrefer L2 (ou respectivement L3 ou L4 ou L5) égal ou supérieur à une épaisseur e2 (ou respectivement e3 ou e4) d'une deuxième plaque à découper d'épaisseur inférieure à l'épaisseur e1 de la première plaque à découper.

Ainsi, pour une lame d'épaisseur Lt de 6mm, et pour découper des plaques d'épaisseur e1 de 13mm et des plaques d'épaisseur e2 de 6 mm, la fente 3 du support fixe 10 aura avantageusement une largeur Lfmax de 32 mm (13mm+13mm+6mm), et la fente 33 du support mobile 30 aura avantageusement une largeur Lf de 18 mm (6mm+6mm+6mm). Dans un tel cas, il est particulièrement avantageux d'avoir plusieurs supports mobiles 30, 40, 50 pour permettre la découpe d'un grand nombre d'épaisseur de plaques.

Bien entendu, l'Homme du métier pour adapter les différentes largeurs de fente du support fixe et du ou des support(s) mobile(s) en fonction des plaques habituellement utilisées.

Une solution technique avantageuse (car pratique et peu coûteuse) pour s'assurer que la lame est constamment maintenue à distance des bords de la fente pendant la découpe, est d'utiliser des entretoises 70 entre la lame et le support mobile.

De préférence, ces entretoises sont situées sur le pivot, de sorte que la lame est montée pivotante sur le support mobile par le pivot muni des entretoises.

Ces dernières ont une épaisseur déterminée pour que la lame soit espacée des bords longitudinaux de la fente du support mobile pendant la découpe. En position de retrait, l'entrefer est maintenu par les entretoises 70 et par le ou les support(s) mobiles.

L'utilisation d'un outil selon l'invention permet de moduler et d'adapter simplement la largeur de la fente à l'épaisseur des plaques à découper. Le montage est facile et l'outil simple et économique à fabriquer.

En étant en prise autour de l'axe de rotation, le ou les supports mobiles ne risquent pas d'être perdus. En outre, leur position d'engagement est sûre, de sorte qu'ils ne risquent pas de coulisser ou de pivoter par mégarde lors de la coupe car la plaque appuie sur le ou les supports mobiles verticalement, c'est-à-dire dans une direction différente de leur mouvement de coulissement ou de pivotement.

Grace à la présence des entrefers L1, L2, L3, L4 ou L5, la coupe d'une plaque en matériau reconstitué se fait facilement par rapport à un outil identique mais dans lequel la fente présente une largeur égale à la largeur de la lame.

En choisissant des entrefers égaux ou supérieurs à l'épaisseur de la lame à découper, il est possible, avec un outil de faible encombrement (ayant un bras de levier restreint) de découper des plaques d'épaisseurs importantes (entre 6 et 15 mm).

L'invention permet de proposer un outil avec un bras de levier plus petit, limitant ainsi l'encombrement et les risques de torsion, de sorte que l'outil peut être moins rigide, et donc plus léger et moins coûteux à fabriquer, sans risque de perte des support mobiles qui restent en prise sur l'axe de rotation de la lame.

## Revendications

1. Outil de coupe (100, 200, 300) pour découper une plaque faite en un matériau reconstitué d'épaisseur déterminée (e1, e2, e3, e4), l'outil comprenant un support fixe (10) sur lequel une lame (20), de largeur de lame (Lt) déterminée, est montée pivotante par un pivot (21), entre une position ouverte pour recevoir, entre le support fixe (10) et la lame (20), la plaque qui doit être découpée, et une position fermée à la fin d'une découpe, le support fixe (10) comprenant une portion (2) munie d'une fente (3) destinée à recevoir au moins une partie de la lame (20) au cours de la coupe, la fente (3) comprenant deux bords longitudinaux (3a-3b) espacés l'un de l'autre par une largeur de fente (Lfmax) strictement supérieure à la largeur de lame (Lt) de sorte que la lame (20) est espacée de chaque bord longitudinal (3a-3b) de la fente (3) et n'entre pas en contact avec lesdits bords longitudinaux de la fente pendant le passage de la position ouverte à la position fermée, **caractérisé en ce que** l'outil comprend au moins un support mobile (30, 40, 50, 60) monté de manière mobile autour de l'axe de rotation de la lame entre une position d'engagement dans laquelle le support mobile (30, 40, 50, 60) est agencé le long des bords longitudinaux (3a-3b) de la fente (3) du support fixe (10), et une position de retrait dans laquelle le support mobile (30, 40, 50, 60) est agencé à distance des bords longitudinaux de la fente du support fixe, ledit au moins un support mobile (30, 40, 50, 60) comprenant une fente (33, 43, 53, 63) de largeur (Lf, Lf1, Lf2, Lf3) inférieure à la largeur (Lfmax) de la fente (3) du support fixe (10) et supérieure à la largeur (Lt) de la lame (20).

2. Outil de coupe (100, 200, 300) selon la revendication 1, dans lequel ledit au moins un support mobile (30, 40, 50, 60) comprend une lumière (31) dans laquelle est engagé l'axe de rotation de la lame, de tel sorte que le support mobile (30, 40, 50, 60) est monté de manière mobile autour de l'axe de rotation (21) de la lame (20), entre la position d'engagement et la position de retrait.

3. Outil de coupe (100, 200, 300) selon la revendication 1 ou 2, dans lequel le support mobile (30, 40, 50, 60) comprend deux flancs longitudinaux (32, 42, 52, 62) espacés l'un de l'autre par une distance (Lf, Lf1, Lf2, Lf3) inférieure à la largeur de fente (Lfmax) entre les deux bords longitudinaux (3a-3b) du support fixe (10) et supérieure à la largeur (Lt) de la lame (20), chaque flancs (32, 42, 52, 62) étant muni d'une lumière (31) dans laquelle est engagé l'axe de rotation (21) de la lame (20), de tel sorte que le support mobile (30, 40, 50, 60) est monté de manière mobile autour de l'axe de rotation de la lame entre la position d'engagement et la position de retrait.

4. Outil de coupe (100, 200) selon la revendication 2 ou 3, dans lequel la lumière (31) portée par le support mobile (30, 40, 50) est oblongue de telle sorte que le support mobile (30, 40, 50) est monté coulissant par rapport à l'axe de rotation (21) de la lame (20).

5. Outil de coupe (100, 200) selon la revendication 3 ou 4, dans lequel chaque flanc (32) comprend une portion d'appui (32a) destinée à coulisser le long des bords (3a-3b) de la fente (3) du support fixe (10), et une portion de guidage (32b) agencée contre le support fixe (10) à distance de la portion d'appui (32a) de telle sorte que le support mobile (30) est guidé en translation.

6. Outil de coupe (100, 200) selon la revendication 4 ou 5, dans lequel le support fixe (10) comprend une fente de réglage (4) dans laquelle est monté coulissante une patte de préhension (34) fixée au support mobile (30).

7. Outil de coupe (300) selon la revendication 2 ou 3, dans lequel la lumière portée par le support mobile est circulaire de telle sorte que le support mobile (60) est monté pivotant par rapport à l'axe de rotation (21) de la lame (20).

8. Outil de coupe (300) selon la revendication 7, dans lequel le support mobile (60) comprend deux flancs longitudinaux (62) munis chacun d'une portion d'appui (62a) destinée à recouvrir les bords longitudinaux (3a-3b) de la fente (3) du support fixe (10) en position d'engagement.

9. Outil de coupe (100, 200, 300) selon l'une quelconque des revendications 1 à 8, dans lequel lorsque la lame est en position fermée et le support mobile en position de retrait, la lame (20) est espacée de chaque bord longitudinal (3a-3b) de la fente du support fixe par un entrefer (L1) égal ou supérieur à une épaisseur (e1) d'une première plaque à découper, et dans lequel lorsque la lame est en position fermée et le support mobile en position d'engagement, la lame (20) est espacée de chaque bord longitudinal de la fente (33) du support mobile par un entrefer (L2) égal ou supérieur à une épaisseur (e2) d'une seconde plaque à découper d'épaisseur (e2) inférieure à l'épaisseur (e1) de la première plaque à découper.

10. Outil de coupe (100, 200, 300) selon l'une quelconque des revendications 1 à 9, dans lequel la lame (20) est montée pivotante sur le support (10) par un pivot (21) muni d'entretoises (70) d'épaisseur déterminée pour que la lame soit espacée des bords longitudinaux (3a-3b) de la fente (3, 33, 43, 53, 63) pendant la découpe.

## Patentansprüche

1. Schneidwerkzeug (100, 200, 300) zum Zuschneiden einer aus einem regenerierten Material hergestellten Platte mit einer bestimmten Dicke (e1, e2, e3, e4), wobei das Werkzeug eine feststehende Halterung (10) umfasst, auf der eine Klinge (20) mit einer bestimmten Klingenbreite (Lt) durch einen Drehzapfen (21) schwenkbar zwischen einer geöffneten Position zum Aufnehmen der Platte, die zugeschnitten werden soll, zwischen der feststehenden Halterung (10) und der Klinge (20) und einer geschlossenen Position am Ende eines Zuschnitts gelagert ist, wobei die feststehende Halterung (10) einen Abschnitt (2) umfasst, der mit einem Schlitz (3) versehen ist, der dazu bestimmt ist, während des Schnitts mindestens einen Teil der Klinge (20) aufzunehmen, wobei der Schlitz (3) zwei Längsränder (3a-3b) umfasst, die voneinander durch eine Schlitzbreite (Lfmax) beabstandet sind, die streng größer als die Klingenbreite (Lt) ist, derart, dass die Klinge (20) von jedem Längsrand (3a-3b) des Schlitzes (3) beabstandet ist und während des Übergangs aus der geöffneten Position in die geschlossene Position nicht mit den Längsrändern des Schlitzes in Kontakt kommt, **dadurch gekennzeichnet, dass** das Werkzeug mindestens eine bewegliche Halterung (30, 40, 50, 60) umfasst, die um die Drehachse der Klinge beweglich zwischen einer Eingriffsposition, in welcher die bewegliche Halterung (30, 40, 50, 60) entlang der Längsränder (3a-3b) des Schlitzes (3) der feststehenden Halterung (10) angeordnet ist, und einer Rückzugsposition, in welcher die bewegliche Halterung (30, 40, 50, 60) in einem Abstand von den Längsrändern des Schlitzes der feststehenden Halterung angeordnet ist, gelagert ist, wobei die mindestens eine bewegliche Halterung (30, 40, 50, 60) einen Schlitz (33, 43, 53, 63) mit einer Breite (Lf, Lf1, Lf2, Lf3) umfasst, die kleiner als die Breite (Lfmax) des Schlitzes (3) der feststehenden Halterung (10) und größer als die Breite (Lt) der Klinge (20) ist.

2. Schneidwerkzeug (100, 200, 300) nach Anspruch 1, wobei die mindestens eine bewegliche Halterung (30, 40, 50, 60) eine Öffnung (31) umfasst, in welche die Drehachse der Klinge eingreift, derart, dass die bewegliche Halterung (30, 40, 50, 60) um die Drehachse (21) der Klinge (20) zwischen der Eingriffsposition und der Rückzugsposition beweglich gelagert ist.

3. Schneidwerkzeug (100, 200, 300) nach Anspruch 1 oder 2, wobei die bewegliche Halterung (30, 40, 50, 60) zwei Längsseitenteile (32, 42, 52, 62) umfasst, die durch einen Abstand (Lf, Lf1, Lf2, Lf3) voneinander beabstandet sind, der kleiner als die Schlitzbreite (Lfmax) zwischen den zwei Längsrändern (3a-3b) der feststehenden Halterung (10) und größer als die Breite (Lt) der Klinge (20) ist, wobei jedes Seitenteil (32, 42, 52, 62) mit einer Öffnung (31) versehen ist, in welche die Drehachse (21) der Klinge (20) eingreift, derart, dass die bewegliche Halterung (30, 40, 50, 60) um die Drehachse der Klinge zwischen der Eingriffsposition und der Rückzugsposition beweglich gelagert ist.

4. Schneidwerkzeug (100, 200) nach Anspruch 2 oder 3, wobei die Öffnung (31), mit der die bewegliche Halterung (30, 40, 50) versehen ist, länglich ist, derart, dass die bewegliche Halterung (30, 40, 50) bezüglich der Drehachse (21) der Klinge (20) verschiebbar gelagert ist.

5. Schneidwerkzeug (100, 200) nach Anspruch 3 oder 4, wobei jedes Seitenteil (32) einen Stützabschnitt (32a) umfasst, der dazu bestimmt ist, entlang der Ränder (3a-3b) des Schlitzes (3) der feststehenden Halterung (10) zu gleiten, und einen Führungsabschnitt (32b), der an der feststehenden Halterung (10) in einem Abstand von dem Stützabschnitt (32a) angeordnet ist, derart, dass die bewegliche Halterung (30) translatorisch geführt wird.

6. Schneidwerkzeug (100, 200) nach Anspruch 4 oder 5, wobei die feststehende Halterung (10) einen Einstellschlitz (4) umfasst, in welchem eine Grifflasche (34), die an der beweglichen Halterung (30) befestigt ist, verschiebbar gelagert ist.

7. Schneidwerkzeug (300) nach Anspruch 2 oder 3, wobei die Öffnung, mit der die bewegliche Halterung versehen ist, kreisförmig ist, derart, dass die bewegliche Halterung (60) schwenkbar bezüglich der Drehachse (21) der Klinge (20) gelagert ist.

8. Schneidwerkzeug (300) nach Anspruch 7, wobei die bewegliche Halterung (60) zwei Längsseitenteile (62) umfasst, die jeweils mit einem Stützabschnitt (62a) versehen sind, der dazu bestimmt ist, in der Eingriffsposition die Längsränder (3a-3b) des Schlitzes (3) der feststehenden Halterung (10) abzudecken.

9. Schneidwerkzeug (100, 200, 300) nach einem der Ansprüche 1 bis 8, wobei, wenn sich die Klinge in der geschlossenen Position und die bewegliche Halterung in der Rückzugsposition befindet, die Klinge (20) von jedem Längsrand (3a-3b) des Schlitzes der feststehenden Halterung durch einen Spalt (L1) beabstandet ist, der gleich einer oder größer als eine Dicke (e1) einer ersten zuzuschneidenden Platte ist, und wobei, wenn sich die Klinge in der geschlossenen Position und die bewegliche Halterung in der Eingriffsposition befindet, die Klinge (20) von jedem Längsrand des Schlitzes (33) der beweglichen Halterung durch einen Spalt (L2) beabstandet ist, der gleich einer oder größer als eine Dicke (e2) einer zweiten zuzuschneidenden Platte mit einer Dicke (e2) ist, die kleiner als die Dicke (e1) der ersten zuzuschneidenden Platte ist.

10. Schneidwerkzeug (100, 200, 300) nach einem der Ansprüche 1 bis 9, wobei die Klinge (20) auf der Halterung (10) durch einen Drehzapfen (21) schwenkbar gelagert ist, der mit Abstandshaltern (70) mit einer bestimmten Dicke versehen ist, so dass die Klinge während des Zuschneidens von den Längsrändern (3a-3b) des Schlitzes (3, 33, 43, 53, 63) beabstandet ist.

## Claims

1. Cutting tool (100, 200, 300) for cutting a panel which is made of reconstituted material and which has a given thickness (e1, e2, e3, e4) the tool comprising a fixed support (10) on which a blade (20), having a given blade width (Lt), is mounted so as to be able to pivot by means of a pivot (21), between an open position for receiving, between the fixed support (10) and the blade (20), the panel which is to be cut, and a closed position at the end of a cut, the fixed support (10) comprising a portion (2) that is provided with a slot (3) which is designed to receive at least part of the blade (20) during the cut, the slot (3) comprising two longitudinal edges (3a-3b) that are spaced apart from one another by a slot width (Lfmax) which is strictly greater than the blade width (Lt) such that the blade (20) is spaced apart from each longitudinal edge (3a-3b) of the slot (3) and does not come into contact with said longitudinal edges of the slot when passing from the open position to the closed position, **characterized in that** the tool comprises at least one movable support (30, 40, 50, 60) that is mounted so as to be able to move about the rotation pin of the blade between an engagement position in which the movable support (30, 40, 50, 60) is arranged along the longitudinal edges (3a-3b) of the slot (3) of the fixed support (10), and a retracted position in which the movable support (30, 40, 50, 60) is arranged spaced apart from the longitudinal edges of the slot of the fixed support, said at least one movable support (30, 40, 50, 60) comprising a slot (33, 43, 53, 63) of width (Lf, Lf1, Lf2, Lf3) smaller than the width (Lfmax) of the slot (3) of the fixed support (10), and greater than the width (Lt) of the blade (20).

2. Cutting tool (100, 200, 300) according to Claim 1, in which said at least one movable support (30, 40, 50, 60) comprises a cutout (31) in which is engaged the rotation pin of the blade, such that the movable support (30, 40, 50, 60) is mounted so as to be able to move about the rotation pin (21) of the blade (20), between the engagement position and the retracted position.

3. Cutting tool (100, 200, 300) according to Claim 1 or 2, in which the movable support (30, 40, 50, 60) comprises two longitudinal flanks (32, 42, 52, 62) that are spaced apart from one another by a distance (Lf, Lf1, Lf2, Lf3) smaller than the slot width (Lfmax) between the two longitudinal edges (3a-3b) of the fixed support (10) and greater than the width (Lt) of the blade (20), each flank (32, 42, 52, 62) being provided with a cutout (31) in which is engaged the rotation pin (21) of the blade (20), such that the movable support (30, 40, 50, 60) is mounted so as to be able to move about the rotation pin of the blade, between the engagement position and the retracted position.

4. Cutting tool (100, 200) according to Claim 2 or 3, in which the cutout (31) borne by the movable support (30, 40, 50) is oblong, such that the movable support (30, 40, 50) is mounted so as to be able to slide with respect to the rotation pin (21) of the blade (20).

5. Cutting tool (100, 200) according to Claim 3 or 4, in which each flank (32) comprises a bearing portion (32a) that is designed to slide along the edges (3a-3b) of the slot (3) of the fixed support (10), and a guiding portion (32b) that is arranged against the fixed support (10), at a distance from the bearing portion (32a), such that the movable support (30) is guided in translation.

6. Cutting tool (100, 200) according to Claim 4 or 5, in which the fixed support (10) comprises an adjustment slot (4) in which is mounted, so as to be able to slide, a gripping tab (34) that is fixed to the movable support (30).

7. Cutting tool (300) according to Claim 2 or 3, in which the cutout borne by the movable support is circular, such that the movable support (60) is mounted so as to be able to pivot with respect to the rotation pin (21) of the blade (20).

8. Cutting tool (300) according to Claim 7, in which the movable support (60) comprises two longitudinal flanks (62), each one provided with a bearing portion (62a) designed to cover the longitudinal edges (3a-3b) of the slot (3) of the fixed support (10) in the engagement position.

9. Cutting tool (100, 200, 300) according to any one of Claims 1 to 8, in which, when the blade is in the closed position and the movable support is in the retracted position, the blade (20) is spaced apart from each longitudinal edge (3a-3b) of the slot of the fixed support by a gap (L1) that is equal to or greater than a thickness (el) of a first panel that is to be cut, and in which, when the blade is in the closed position and the movable support is in the engagement position, the blade (20) is spaced apart from each longitudinal edge of the slot (33) of the movable support by a gap (L2) that is equal to or greater than a thickness (e2) of a second panel that is to be cut, of thickness (e2) less than the thickness (el) of the first panel to be cut.

10. Cutting tool (100, 200, 300) according to any one of Claims 1 to 9, in which the blade (20) is mounted so as to be able to pivot on the support (10) by means of a pivot (21) provided with spacers (70) of a given thickness so that the blade is spaced apart from the longitudinal edges (3a-3b) of the slot (3, 33, 43, 53, 63) during cutting.
